# EUROPÄISCHE PATENTSCHRIFT

(11) **EP 1 418 360 B1**
(45) Veröffentlichungstag und Bekanntmachung des Hinweises auf die Patenterteilung: **10.08.2005**
(21) Anmeldenummer: 02024698.9
(22) Anmeldetag: 06.11.2002
(51) Int. Cl.: F16D 25/12, F16D 13/74

(54) **Durchflussvorrichtung zum Umlenken eines Flüssigkeitsflusses oder zum Übertragen eines Druckes einer Flüssigkeit**
Through flow device for changing the direction of or transmitting pressure of a fluid
Dispositif de débit pour changer la direction d'un fluide ou pour transmettre la pression d'un fluide

(43) Veröffentlichungstag der Anmeldung: 12.05.2004
(73) Patentinhaber: BorgWarner, Inc., Auburn Hills, MI 48326-1782 (US)
(72) Erfinder: Vasa, Ben, Lapeer, MI 48446 (US)
(74) Vertreter: Patentanwälte Westphal, Mussgnug & Partner

(56) Entgegenhaltungen:
- EP-A- 0 422 767
- GB-A- 2 351 331
- US-B1- 6 371 267
- PATENT ABSTRACTS OF JAPAN vol. 015, no. 491 (M-1190), 12. Dezember 1991 (1991-12-12) & JP 03 213723 A (NISSAN MOTOR CO LTD), 19. September 1991 (1991-09-19)

## Beschreibung

Die Erfindung betrifft eine Durchflussvorrichtung zum Umlenken eines Flüssigkeitsflusses oder zum Übertragen eines Druckes einer Flüssigkeit durch mechanische Komponenten aus einer Anströmrichtung in eine in einem Winkel dazu verlaufende Abströmrichtung gemäß dem Oberbegriff des Anspruchs 1.

Die bekannten Durchflussvorrichtungen, von denen die Erfindung ausgeht, sind aus dem Stand der Technik in einer Vielzahl von Abwandlungen bekannt. Exemplarisch sei auf eine Durchflussvorrichtung für ein rotierendes Kupplungsgehäuse in einem Automatikgetriebe hingewiesen.

Ein derartiges Kupplungsgehäuse wird häufig über Bohrungen in einer gegossenen oder geschmiedeten Nabe mit Druckmittel zum Betätigen der Kupplung bzw. mit Kühlmittel zum Kühlen der aneinander reibenden Elemente im Falle einer Reibkupplung versorgt. Der Druck-/Kühlmittelzufluss zur Nabe sowie der Abfluss des Druck-/Kühlmittels von der Nabe erfolgt typischerweise in radialer Richtung, während zwischen diesen der Druck-/Kühlmittelfluss in axialer Richtung geführt ist.

Gemäß dem betriebsinternen Stand der Technik sind zwei Möglichkeiten der Führung des Druck- oder Kühlmittels bekannt.

Gemäß einer ersten Variante ist die Nabe als separates Bauteil ausgeführt. Bei dieser Variante umfasst die Nabe einen Rohrabschnitt, welcher in einen Schaft des Kupplungsgehäuses eingepasst ist. Zur (im Wesentlichen) radialen Zuführung sowie zur (im Wesentlichen) Führung des Druck-/Kühlmittels in axialer Richtung ist/sind in die Außenwandung des Rohrabschnitts eine/mehrere vorzugsweise in Achsrichtung verlaufende Einbuchtung/-en vorgesehen, welche sich (bei in den Schaft eingesetztem Rohrabschnitt) von der Kupplungsgehäuseaußenseite bis in den Schaft, jedoch nicht bis zur Innenseite des Gehäuses erstreckt bzw. erstrecken. Der Schaft weist gehäuseinnenseitig (wenigstens) eine im Wesentlichen in radialer Richtung verlaufende Bohrung auf, welche eine Verbindung zu der/den Einbuchtung/-en zur Kühl-/Druckmittelabführung herstellt. Dieser winklige Verlauf einer Bohrung zu einer entsprechenden Einbuchtung macht eine mechanische Bearbeitung eines gegossenen oder geschmiedeten Rohrabschnitts der Nabe in einen Schaft des Kupplungsgehäuses erforderlich.

Gemäß einer zweiten Variante ist die Nabe einteilig mit dem Kupplungsgehäuse ausgeführt. Diese Nabe weist gehäuseaußenseitig (wenigstens) eine im Wesentlichen in radialer Richtung verlaufende Bohrung zur Kühl-/Druckmittelzuführung und gehäuseinnenseitig (wenigstens) eine im wesentlichen in radialer Richtung verlaufende Bohrung zur Kühl-/Druckmittelabführung auf. Die die beiden (oder ggf. weiteren) in im Wesentlichen radialer Richtung verlaufenden Bohrungen in axialer Richtung verbindende Bohrung ist aus fertigungstechnischen Gründen zu wenigstens einer Stirnseite der Nabe hin offen. Die Folge ist, dass diese Öffnung mit einem Pfropfen oder dergleichen verschlossen werden muss, um einen kontrollierten Druckmitteldruck bzw. Kühlmittelfluss aufbauen zu können. Diese geometrische Anordnung von zueinander winklig verlaufender Bohrungen macht eine mechanische Bearbeitung eines gegossenen oder geschmiedeten Nabenrohlings, ein Einbringen von Bohrungen sowie ein Abdichten mit Dichtungspfropfen erforderlich.

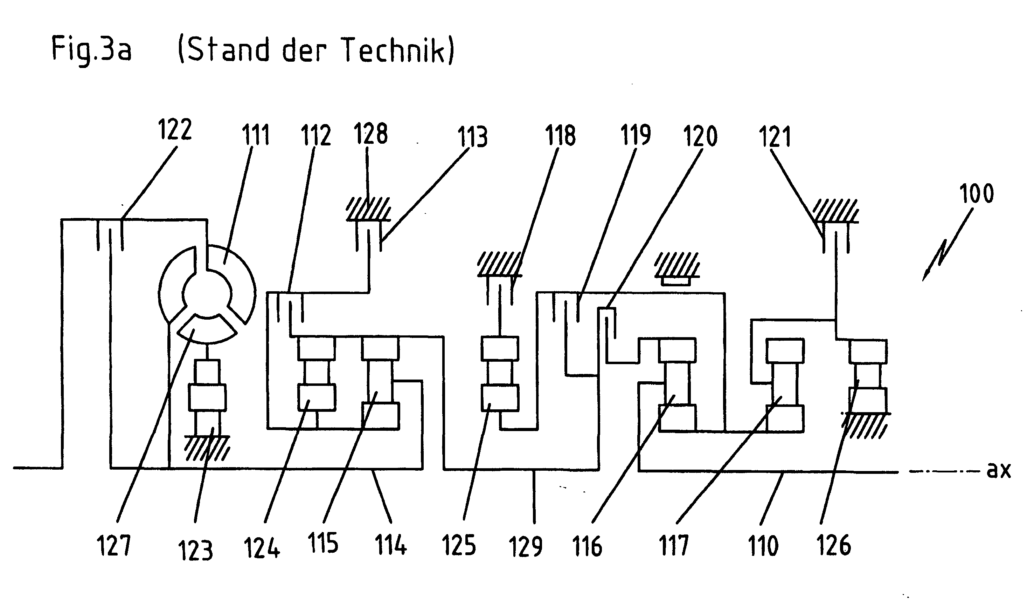

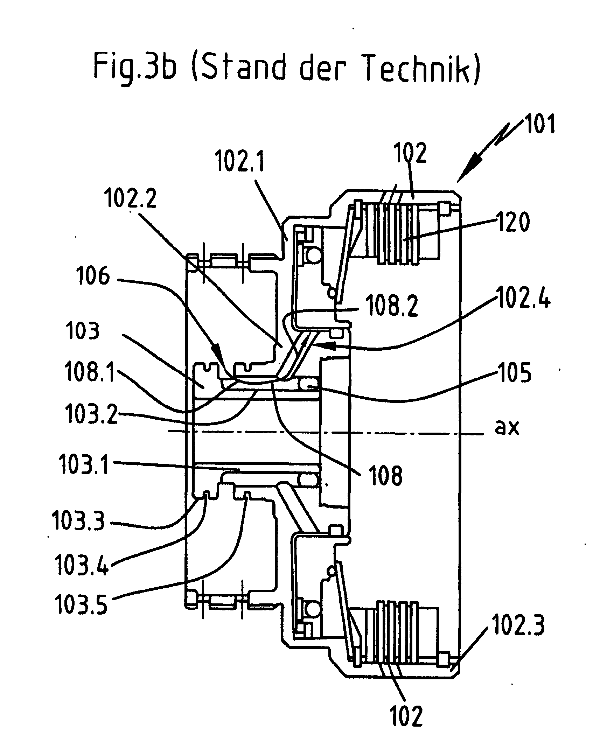

Anhand eines in den Figuren 3a) und 3b) skizzierten Beispiels einer rotierenden (Kupplungs-) Gehäuseanordnung 101 in einem konventionellen Mehrgangautomatikgetriebe 100 für ein Kraftfahrzeug wird nachfolgend der Aufbau einer Durchflussvorrichtung gemäß der letztgenannten Variante erläutert.

Die Figur 3a) zeigt schematisch ein Mehrgangautomatikgetriebe der Firma Ford, wie es vielfach gemäß dem Stand der Technik eingesetzt wird. Zur Verdeutlichung der Position und Integration einer derartigen (Kupplungs-) Gehäuseanordnung 101 in dem Mehrgangautomatikgetriebe 100 sind in der Zeichnungsfigur 3a) wesentliche Bestandteile und Baugruppen des Getriebes 100 mit Bezugszeichen versehen, auf die in der nachfolgenden Beschreibung Bezug genommen wird.

Demgemäß entnimmt man der Figur 3a), dass das Mehrgangautomatikgetriebe 100 im Wesentlichen radialsymmetrisch zu der (Getriebe-)Achse ax ausgebildet ist. Auf der linken Seite der Zeichnungsfigur ist die Eingangs- oder Antriebswelle 114 dargestellt, welche in einem Kraftfahrzeug über den Wandler 111 bzw. die Wandlerüberbrückungskupplung 122 mit einem (nicht dargestellten) Verbrennungsmotor verbunden ist. Die Freilaufkupplung 123 stützt das Reaktionsmoment des Stators 127 gegenüber dem Getriebegehäuse 128 ab.

Auf der rechten Seite der Zeichnungsfigur 3a) ist die Ausgangs- oder Abtriebswelle 110 des Getriebes 100 gezeichnet, welche über entsprechende (nicht dargestellte) Umlenkgetriebe mit der (ebenfalls nicht dargestellten) Radachse des Kraftfahrzeugs verbunden ist. Als weitere Baugruppen des Automatikgetriebes 100 entnimmt man der Figur 3a) diverse Planetengetriebesätze 115, 116, 117 und Schalt-Kupplungen 112, 113, 118, 119, 120, 121, sowie die Freiläufe (oder Freilaufkupplungen) 124 und 125 mit Hilfe derer die verschiedenen Über-/Untersetzungen der Gänge geschaltet werden können.

Rein exemplarisch zeigt die Zeichnungsfigur 3b) einen Axialschnitt der die Kupplung 120 aufnehmenden Gehäuseanordnung 101, wie sie tatsächlich in dem Getriebe 100 gemäß der Figur 3a) realisiert ist. Demzufolge umfasst die Gehäuseanordnung 101 ein die Kupplung 120 umgebendes Umgehäuse 102 mit dessen Fixiereinrichtung an der Zwischenwelle 129, bestehend aus einer mit dem Umgehäuse 102 einteilig ausgebildeten Nabe 103.

Das Umgehäuse 102 umfasst ein hohlzylinderförmiges Mittelteil 102.3 und ein an einer Stirnseite des hohlzylinderförmigen Mittelteils 102.3 das Mittelteil 102.3 abschließendes im Wesentlichen ringförmiges Bodenteil 102.1 mit einem im Wesentlichen zylinderförmigen Schaft 102.2, an den sich ein Rohrabschnitt 103.1 der Nabe 103 innenseitig anschließt.

Der Schaft 102.2 des Umgehäuses 102 weist mehrere Radialbohrungen auf, von denen eine -durch das Bezugszeichen 102.4 gekennzeichnet - in der Zeichnungsfigur in radialer Richtung und schräg nach rechts oben verlaufend eingezeichnet ist.

In gleicher Anzahl und in entsprechender kommunizierender Anordnung sind in dem Rohrabschnitt 103.1 der Nabe 103 Axialbohrungen 103.2 vorgesehen, welche sich von dem inneren Ende des Rohrabschnitts 103.1 der Nabe 103 bis geringfügig in den den Schaft 102.2 überragenden Bereich der Nabe 103 hinein erstrecken. Die Radialbohrungen 102.4 und die mit diesen kommunizierenden Axialbohrungen 103.2 bilden Durchflusskanäle für eine Flüssigkeit, insbesondere Kühl- und/oder Druckmittel.

Um eine Flüssigkeit ausschließlich über die Durchflusskanäle bildenden Einbuchtungen 103.2 in der Nabe 103 und die Radialbohrungen 102.4 im Schaft 102.2 von der Außenseite der Gehäuseanordnung 101 in das Innere des Umgehäuses 102 führen zu können, ist es also entsprechend der vorstehenden Beschreibung erforderlich, dass die axial verlaufenden Bohrungen 103.2 in der Nabe 103 in Bezug auf die Radialbohrungen 102.4 im Schaft 102.2 einen Flüssigkeitsdurchfluss ermöglichend ausgerichtet sind. Darüber hinaus müssen die durch die sich zum inneren Ende der Nabe 103 erstreckenden Axialbohrungen 103.2 gebildeten Öffnungen mit Hilfe entsprechender Pfropfen 105 verschlossen werden, um einen gewünschten Kühlmittelfluss- bzw. Druckmitteldruckpfad 108 ausgehend von dem den Schaft 102.2 überragenden Bereich der Axialbohrung 103.2 in der Nabe 103 (gekennzeichnet durch die Flüssigkeitszuführung 106) über die Axialbohrung 103.2 (gekennzeichnet durch den Pfad 108.1) und die im Winkel β angeordnete Radialbohrung 102.4 im Schaft 102.2 (gekennzeichnet durch den Pfad 108.2) in das Gehäuseinnere hinein zu realisieren.

Eine kontrollierte Flüssigkeits- (Kühlmittel- bzw Druckmittel-)zufuhr 106 ermöglicht der nachfolgend beschriebene Aufbau: In die zylindermantelförmige Außenwandung 103.3 des freien Endes des Rohrabschnitts 103.1 sind zwei in Umfangsrichtung umlaufende Nuten 103.4, 103.5 eingebracht. In diese umlaufenden Nuten 103.4, 103.5 sind (hier nicht dargestellte) Dichtungsringe eingesetzt. Über beide Dichtungsringe wird eine (hier nicht dargestellte) Muffe mit entsprechend den Öffnungen für die Flüssigkeitszuführungen 106 angeordneten Öffnungen übergestülpt, über welche dann ein Flüssigkeitstransport (insbesondere von Druck- und/oder Kühlmittel) erfolgt.

Obwohl sich die beiden vorgenannten Ausführungsformen gemäß dem betriebsintern bekannten Stand der Technik dem Grunde nach bewährt haben, sind sowohl aus fertigungstechnischer Sicht als auch aus betriebstechnischer Sicht Verbesserungen vonnöten.

Als fertigungstechnisch ungünstig wird allgemein die bislang erforderliche mechanische (Glätt-)Bearbeitung der Axialbohrung der Nabe oder des Schafts angesehen.

Fernerhin ist das Einbringen der Radialbohrungen ein Arbeitsschritt, welcher eine eigens dafür vorzusehende Apparatur erfordert. Beim Einbringen der Bohrungen werden darüber hinaus Späne erzeugt, welche nur sehr schwer wieder,aus den Bohrungen sowie aus Fugen oder Nuten wieder entfernt werden können.

Auch das Einsetzen der Dichtungspfropfen erfordert einen zusätzlichen Arbeitsgang, speziell ausgebildete Pfropfen und entsprechendes Equipment und es ist darüber hinaus eine zusätzliche Bearbeitungszeit erforderlich.

Schließlich hat sich herausgestellt, dass beim Betrieb der Kupplung eine Leckage zwischen den langgestreckten Einbuchtungen und damit ein "Übersprechen" angrenzender mit ggf. unterschiedlicher Druckbeaufschlagung arbeitender Durchflusskanäle auftritt, was zu unerwünschten Kupplungsbetätigungen führen kann.

In der US 6,371,267 B1 ist eine flüssigkeitsgekühlte Kupplung beschrieben, bei der die Kühlflüssigkeit über in das Kühlsystem eingeformte radial verlaufende Kanäle geführt wird. Die in dieser Druckschrift beschriebene Durchflussvorrichtung ist vergleichsweise kompliziert ausgeführt und erfordert eine Vielzahl an Einzelkomponenten, was mit hohen Herstellungskosten verbunden ist.

Der Erfindung liegt somit die Aufgabe zugrunde, eine Durchflussvorrichtung zum Umlenken eines Flüssigkeitsflusses oder zum Übertragen eines Druckes einer Flüssigkeit vorzustellen, bei der die vorgenannten Probleme nicht oder nur in weit reduziertem Maß auftreten. Insbesondere soll eine Durchflussvorrichtung vorgestellt werden, welche kostengünstig herstellbar ist und darüberhinaus eine hohe Betriebszuverlässigkeit aufweist.

Diese Aufgabe wird bei einer gattungsgemäßen Durchflussvorrichtung zum Umlenken eines Flüssigkeitsflusses oder zum Übertragen eines Druckes einer Flüssigkeit durch mechanische Komponenten aus einer Anströmrichtung in eine in einem Winkel dazu verlaufende Abströmrichtung durch die Merkmale des kennzeichnenden Teils des Anspruches 1 erfindungsgemäß gelöst.

Vorteilhafte Ausführungen und Weiterbildungen der Erfindung sind in den Unteransprüchen angegeben.

Die Erfindung geht von dem Konzept aus, dass aneinander angrenzende mechanische Komponenten an jeweils zueinander in einem Winkel zueinander verlaufenden Anlageflächen zumindestens teilweise im wesentlichen formschlüssig aneinander grenzen und dass zumindestens jeweils eine der aneinander angrenzenden Anlageflächen eine die Anströmrichtung der Flüssigkeit und die Abströmrichtung der Flüssigkeit festlegende Nut aufweist.

Im Winkel zueinander verlaufende Anlageflächen mit entsprechenden Nuten umfassen dabei beispielsweise auch Umlenkeinrichtungen mit (teil-)kreisförmiger, schraubenförmiger, wendelförmiger oder sonst wie gekrümmter auf der Oberfläche eines Zylinders, einer Kugel, eines Kegels oder dergleichen entlang verlaufender Nutführung, bei der ein Wechsel der Strömungsrichtung oder Strömungsebene um einen Winkel stattfindet. Es ist fernerhin für den Fachmann auf dem einschlägigen Fachgebiet unmittelbar einsichtig, dass unter einer Nut jede beliebige Oberflächenstrukturierung aneinander bige Oberflächenstrukturierung aneinander grenzender mechanischer Komponenten einschließt, welche einen Flüssigkeits- oder Drucktransport ermöglicht.

Das Einbringen der Nut oder Nuten in eine oder beide der aneinandergrenzenden mechanischen Komponenten kann unmittelbar beim Schmieden oder Gießen der entsprechenden mechanischen Komponente/-n erfolgen oder durch einen sich anschließenden Fräs-, Säge- oder Schneidprozeß.

Es ist auch möglich, dass die aneinander angrenzenden mechanischen Komponenten miteinander verschweißt oder verlötet sind. Der Vorteil dieser Ausführungsvariante besteht darin, dass kein "Übersprechen" benachbarter Durchflusskanäle mehr stattfinden kann.

Bei einer Gehäuseanordnung einer Kupplung wie es beispielsweise in der Beschreibungseinleitung vorgestellt wurde und bei der die eine der beiden mechanischen Komponenten ein im wesentlichen zu einer Achse radialsymmetrisches Umgehäuse mit einem hohlzylinderförmigen Mittelteil, einem dieses Mittelteil einendseitig abschließenden im wesentlichen kreisringförmigen Bodenteil mit einer Innenwandung und eine an den Innenrand des Bodenteils anschließenden Muffe mit einer Innenwandung ist, bestünde eine erfindungsgemäße Ausführungsform darin, dass die andere der beiden mechanischen Komponenten eine Nabe ist, umfassend ein im wesentlichen kreisringförmiges Bodenstück mit einer Außenwandung und an den Innenrand des Bodenstücks anschließendes Rohrstück mit einer Außenwandung wobei die Innenwandung des Bodenteils und die Außenwandung des Bodenstücks sowie die Innenwandung der Muffe und die Außenwandung des Rohrstücks die jeweiligen Anlageflächen bilden. Diese Ausführungsform besticht durch ihre Einfachheit und damit durch deren kostensparender Herstellung.

Im einfachsten Fall stellen die Innenwandung des Bodenteils und die Außenwandung des Bodenstücks der vorgenannten erfindungsgemäßen Ausführungsform radial zur Achse verlaufende Ebenen dar. Es wäre jedoch auch möglich dass diese vorstehend als Ebenen ausgebildeten Flächen beispielsweise die Außenflächen eines Kegelmantels oder auch Kugelteilflächen darstellen.

Entsprechend stellen die Innenwandung der Muffe und die Außenwandung des Rohrstücks koaxial zur Achse verlaufende zylindermantelförmige Flächen dar. Selbstverständlich wäre auch hier beispielsweise denkbar, dass die korrespondierenden Flächen aufgrund der bevorzugten Achssymmetrie koaxial angeordnete Kegelmantelflächen oder dergleichen darstellen.

Erfindungsgemäß ist vorgesehen, dass die Innenwandung der Muffe zur Sicherstellung einer homogenen Flüssigkeitsversorgung (Druck- und/oder Kühlmittel) wenigstens drei in axialer Richtung verlaufende Nuten aufweist.

Korrespondierend hierzu ist erfindungsgemäß vorgesehen, dass die Außenwandung des Rohrstücks wenigstens drei in radialer Richtung verlaufende Nuten aufweist.

Um eine (Druckmittel-)Flüssigkeitszuführung der in der Beschreibungseinleitung vorgestellten Art über eine übergestülpte Muffe zu ermöglichen, ist erfindungsgemäß vorgesehen, dass die Stirnseite des Rohrstücks der Nabe die Stirnseite der Muffe bei aneinander angrenzenden Anlageflächen um eine gewisse Länge überragt. Fernerhin ist vorgesehen, dass die Muffe eine im Wesentlichen zylindermantelförmige Außenwandung mit einer in Umfangsrichtung umlaufenden Nut aufweist. Weiterhin ist koaxial zur Achse an der Stirnseite des Rohrstücks ein Fixierring angeordnet - vorzugsweise angeschweißt oder angelötet -, welcher eine zylindermantelförmige Außenwandung mit einer in dieser in Umfangsrichtung umlaufenden Nut aufweist.

Ein Ausführungsbeispiel der Erfindung ist.in der Zeichnung dargestellt und wird im folgenden näher beschrieben. Es zeigen:
- Figur 1: eine erfindungsgemäße Gehäuseanordnung in perspektivischer Explosionsdarstellung,
- Figur 2: die erfindungsgemäße Gehäuseanordnung gemäß der Figur 1 in perspektivischer Darstellung,
- Figur 3a): eine schematische Darstellung eines konventionellen Mehrgangautomatikgetriebes und
- Figur 3b): eine Gehäuseanordnung für eine Kupplung des Mehrgangautomatikgetriebes gemäß der Figur 3a) in Axialschnittdarstellung.

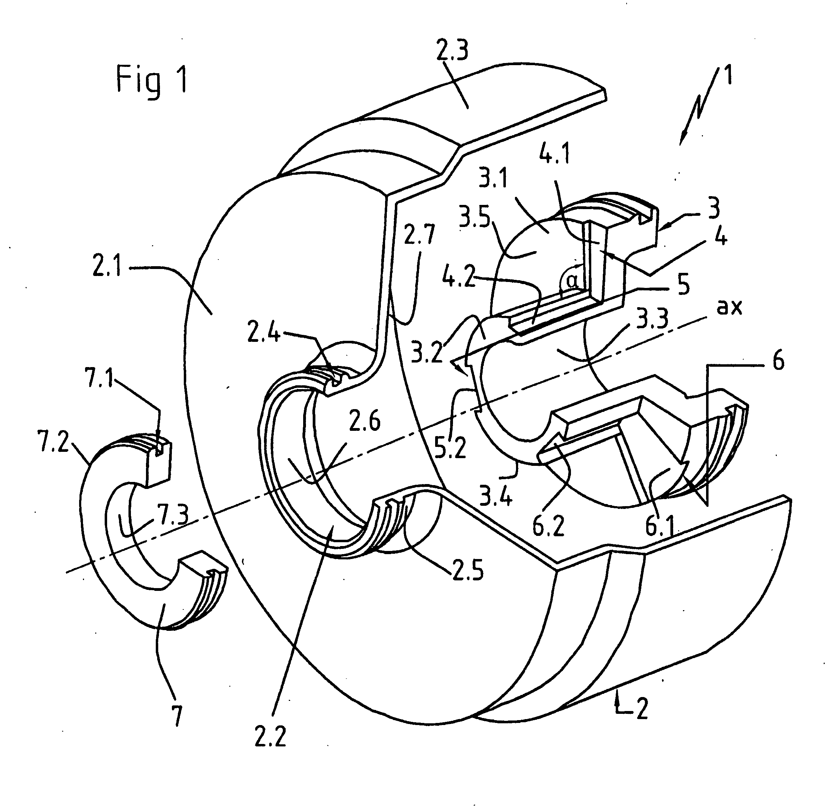

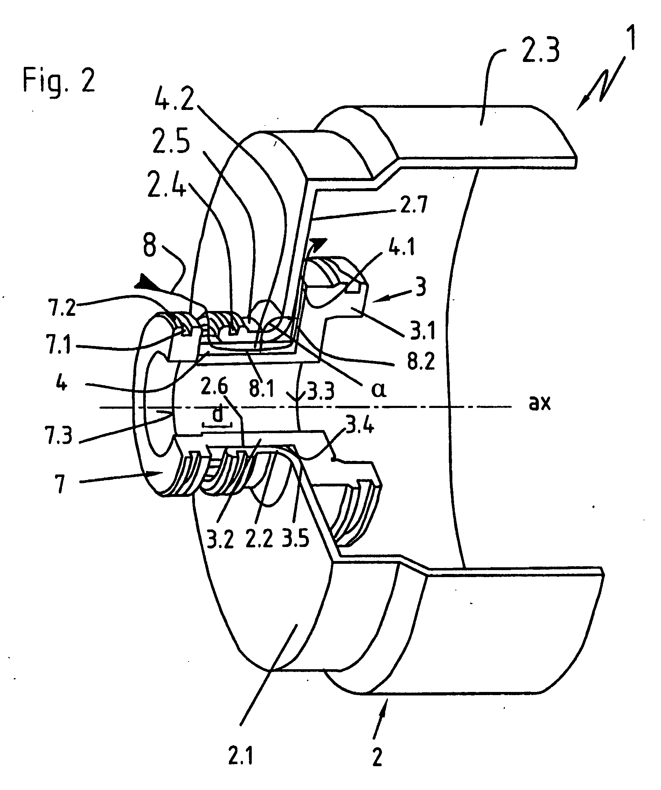

Die Figuren 1 und 2 zeigen eine erfindungsgemäße Durchflussvorrichtung zum Umlenken des Druckmittelflusses bzw. zum Übertragen des Druckes eines Druckmittels durch eine rotierende (Kupplungs-)Gehäuseanordnung 1 in einem konventionellen Mehrgangautomatikgetriebe für ein Kraftfahrzeug aus einer Anströmrichtung in eine in einem Winkel α dazu verlaufende Abströmrichtung.

Die (Kupplungs-)Gehäuseanordnung 1 besteht im vorliegenden Fall aus drei Einzelbauteilen, nämlich einem axialsymmetrischen Umgehäuse 2, einer im Wesentlichen axialsymmetrischen Nabe 3 und einem axialsymmetrischen Fixierring 7.

Das Umgehäuse 2 umfaßt in einstückiger Anfertigung ein hohlzylindrisches Mittelteil 2.3, ein im Wesentlichen ringförmiges Bodenteil 2.1 und eine im Wesentlichen zylinderförmige Muffe 2.2. Das Bodenteil 2.1 schließt sich mit seiner äußeren Berandung an eine Stirnseite des Mittelteils 2.3 an. Die Muffe 2.2 schließt nach außen weisend mit einer Stirnseite an die innere Berandung des Bodenteils 2.1 an.

Für die weitere Bezugnahme ist die Innenseite des ringförmigen als flache Scheibe ausgebildeten Bodenteils 2.1 durch das Bezugszeichen 2.7 gekennzeichnet.

Die Muffe 2.2 weist eine zylindermantelförmige Innenwandung auf, welche in den Zeichnungsfiguren 1 und 2 mittels des Bezugszeichens 2.6 versehen ist. Auch die Außenwandung 2.5 der Muffe 2.2 weist im Wesentlichen die Gestalt eines Zylindermantels auf. In diese Außenwandung 2.5 ist in Umfangsrichtung eine umlaufende Nut 2.4 eingebracht.

Die Nabe 3 besteht ebenfalls in einteiliger Ausführung aus einem ring- oder zylinderförmigen Bodenstück 3.1 und einem Rohrstück 3.2. Das Rohrstück 3.2 grenzt dabei an einer Stirnseite an die Innenberandung des Bodenstücks 3.1 an.

Um die Bezugnahme im nachfolgenden zu erleichtern, sind die zylindermantelförmige Innenwandung der Nabe 3 (Rohrstück 3.2 und Bodenstück 3.1) mittels des Bezugszeichens 3.3, die zylindermantelförmige Außenwandung des Rohrstücks 3.2 mittels des Bezugszeichens 3.4 und die in Richtung des Rohrstücks 3.2 weisende Außenwandung des Bodenstücks 3.1 durch das Bezugszeichen 3.5 kenntlich gemacht.

Die Außenwandung 3.4 des Rohrstücks 3.2 und die Außenwandung 3.5 des Bodenstücks 3.1 weisen jeweils drei Nuten 4, 5 und 6 auf. Jede der Nuten 4, 5, 6 verläuft in axialer Richtung von der freien Stirnseite des Rohrstücks 3.2 bis zur Außenwandung 3.5 des Bodenstücks 3.1 (gekennzeichnet durch die Bezugszeichen 4.2, 5.2 und 6.2) und von dort weiter in radialer Richtung bis zum Außenumfang des Bodenstücks 3.1 (gekennzeichnet durch die Bezugszeichen 4.1 und 6.1).

Der kreisring- oder kreiszylinderförmige Fixierring 7 weist eine im Wesentlichen kreiszylinderförmige Außenwandung 7.2 und eine ebensolche Innenwandung 7.3 auf. In der Außenwandung 7.2 befindet sich eine in Umfangsrichtung umlaufende Nut 7.1.

Der Figur 2 entnimmt man, in welcher Weise die drei mechanischen Komponenten, Umgehäuse 2, Nabe 3 und Fixierring 7 die vorstehend genannte (Kupplungs-)Gehäuseanordnung 1 bildend zueinander angeordnet sind. Demnach ist die Nabe 3 mit deren Rohrstück 3.2 von der Innenseite des Umgehäuses 2 her in dessen Muffe 2.2 eingefügt und zwar derart, dass die Innenwandung 2.6 der Muffe 2.2 und die Außenwandung 3.4 des Rohrstücks 3.2 sowie die Innenwandung 2.7 des Bodenteils 2.1 und die Außenwandung des Bodenstücks 3.1 im Wesentlichen formschlüssig aneinanderliegen. Das Rohrstück 3.2 der Nabe 3 überragt dabei die Muffe 2.2 um die Länge d in axialer Richtung ax. Der Fixierring 7 ist mit einer Stirnseite unmittelbar auf die freie Stirnseite der Nabe 3 aufgesetzt. Die gesamte (Kupplungs-) Gehäuseanordnung bildet nunmehr einen im Wesentlichen zur Achse ax axialsymmetrischen Körper.

In die beiden Nuten 2.4 und 7.1 in der Muffe 2.2 bzw. im Fixierring 7 sind jeweils (hier nicht dargestellte) Dichtungsringe einsetzbar. Beide Dichtungsringe übergreifend ist eine mit wenigstens einer Anschlußöffnung versehene (hier ebenfalls nicht dargestellte) Muffe überstülpbar. Die Anschlußöffnung ist dabei über dem durch die Länge d überspannten Bereich des Rohrstücks 3.2 der Nabe 3 liegend angeordnet.

Diese (nicht dargestellte) Anschlußöffnung stellt die Druckmittelzuführöffnung der Durchflussvorrichtung dar. Ein hier zugeführtes Druckmittel wird entlang des mit dem Bezugszeichen 8 gekennzeichneten Flüssigkeitspfads in das Innere der Gehäuseanordnung 1 geführt. Konkret bedeutet dies, dass das Druckmittel zunächst über die axial verlaufenden Teile 4.2, 5.2, 5.3 der Nuten 4, 5 und 6 und durch die Innenwandung 2.6 der Muffe 2.2 begrenzt zur Innenwandung 3.5 des Bodenstücks 3.1 der Nabe 3 geführt wird (Anströmrichtung 8.1). Diese im Winkel α zur Außenwandung 3.4 des Rohrstücks 3.2 verlaufende Wandung lenkt den Druckmittelstrom bzw. den Druck des Druckmittels in diesem Winkel α in radialer Richtung durch die radialen Teile 4.1, 6.1 der Nuten 4, 5 und 6 vorgegeben in das Innere des Umgehäuses 2 (Abströmrichtung 8.2).

### Bezugszeichenliste

- 1: Gehäuseanordnung
- 2: Umgehäuse
- 2.1: Bodenteil des Umgehäuses 2
- 2.2: Muffe
- 2.3: hohlzylinderförmiges Mittelteil des Umgehäuses 2
- 2.4: umlaufende Nut für Dichtungsring
- 2.5: zylindermantelförmige Außenwandung der Muffe 2.2
- 2.6: zylindermantelförmige Innenwandung der Muffe 2.2
- 2.7: Innenwandung des Bodenteils 2.1
- 3: Nabe
- 3.1: Bodenstück der Nabe 3
- 3.2: Rohrstück der Nabe 3
- 3.3: zylindermantelförmige Innenwandung der Nabe 3
- 3.4: zylindermantelförmige Außenwandung des Rohrstücks 3.2
- 3.5: Außenwandung des Bodenstücks 3.1
- 4: Nut
- 4.1: radial verlaufender Teil der Nut 4
- 4.2: axial verlaufender Teil der Nut 4
- 5: Nut
- 5.2: axial verlaufender Teil der Nut 5
- 6: Nut
- 6.1: radial verlaufender Teil der Nut 6
- 6.2: axial verlaufender Teil der Nut 6
- 7: Fixierring
- 7.1: umlaufende Nut für Dichtungsring
- 7.2: zylindermantelförmige Außenwandung des Fixierrings 7
- 7.3: zylindermantelförmige Innenwandung des Fixierrings 7
- 8: Flüssigkeitspfad
- 8.1: Anströmrichtung
- 8.2: Abströmrichtung
- 100: Mehrgangautomatikgetriebe
- 101: Gehäuseanordnung
- 102: Umgehäuse
- 102.1: Bodenteil des Umgehäuses 102
- 102.2: Schaft
- 102.3: hohlzylinderförmiges Mittelteil des Umgehäuses 102
- 102.4: Radialbohrung im Schaft 102.2
- 103: Nabe
- 103.1: Rohrabschnitt
- 103.2: Axialbohrung
- 103.3: zylindermantelförmige Außenwandung des Rohrabschnitts 103.1
- 103.4: umlaufende Nut für Dichtungsring
- 103.5: umlaufende Nut für Dichtungsring
- 105: Pfropfen
- 106: Flüssigkeitszuführung
- 108: Druck-/Flusspfad
- 108.1: Anströmrichtung
- 108.2: Abströmrichtung
- 110: Abtriebswelle
- 111: Wandler
- 112: Kupplung
- 113: Kupplung
- 114: Antriebswelle
- 115: Planetengetriebesatz
- 116: Planetengetriebesatz
- 117: Planetengetriebesatz
- 118: Kupplung
- 119: Kupplung
- 120: Kupplung
- 121: Kupplung
- 122: Wandlerüberbrückungskupplung
- 123: Freilauf (one way clutch)
- 124: Freilauf (one way clutch)
- 125: Freilauf (one way clutch)
- 126: Freilauf (one way clutch)
- 127: Stator
- 128: Getriebegehäuse
- 129: Zwischenwelle

- ax: Achse
- d: Länge
- α: Winkel
- β: Winkel

## Patentansprüche

1. Durchflussvorrichtung (1) zum Umlenken eines Flüssigkeitsflusses (8) oder zum Übertragen eines Druckes einer Flüssigkeit durch mechanische Komponenten (2, 3, 7) aus einer Anströmrichtung (8.1) in eine in einem Winkel (α) dazu verlaufende Abströmrichtung (8.2) umfassend zwei aneinander angrenzende mechanische Komponenten (2, 3), wobei die beiden aneinander angrenzenden mechanischen Komponenten (2, 3) an jeweils zwei zueinander in dem Winkel (α) zueinander verlaufenden Anlageflächen (2.6, 3.4; 2.7, 3.5) zumindestens teilweise im wesentlichen formschlüssig aneinander grenzen und wobei zumindestens jeweils eine der beiden aneinander angrenzenden Anlageflächen (3.4, 3.5) eine die Anströmrichtung (8.1) und die Abströmrichtung (8.2) festlegende Nut (4, 4.1, 4.2; 5, 5.2; 6, 6.1, 6.2) aufweist,
**dadurch gekennzeichnet, dass**
die eine der beiden mechanischen Komponenten ein im wesentlichen zu einer Achse (ax) radialsymmetrisches Umgehäuse (2) einer Getriebeanordnung ist, umfassend ein hohlzylinderförmiges Mittelteil (2.3) und ein dieses Mittelteil (2.3) einendseitig abschließendes im wesentlichen kreisringförmiges Bodenteil (2.1) mit einer Innenwandung (2.7) und dass die andere der beiden mechanischen Komponenten eine Nabe (3) ist, umfassend ein im wesentlichen kreisringförmiges Bodenstück (3.1) mit einer Außenwandung (3.5) und ein an den Innenrand des Bodenstücks (3.1) anschließendes Rohrstück (3.2) mit einer Außenwandung (3.4), dass das Umgehäuse (2) eine an den Innenrand des Bodenteils (2.1) anschließende Muffe (2.2) mit einer Innenwandung (2.6) umfasst und dass die Innenwandung (2.7) des Bodenteils (2.1) und die Außenwandung (3.5) des Bodenstücks (3.1) sowie die Innenwandung (2.6) der Muffe (2.2) und die Außenwandung (3.4) des Rohrstücks (3.2) die jeweiligen Anlageflächen bilden.

2. Durchflussvorrichtung (1) nach Anspruch 1, **dadurch gekennzeichnet, dass** die Innenwandung (2.7) des Bodenteils (2.1) und die Außenwandung (3.5) des Bodenstücks (3.1) radial zur Achse (ax) verlaufende Ebenen darstellen.

3. Durchflussvorrichtung (1) nach einem der Ansprüche 1 oder 2, **dadurch gekennzeichnet, dass** die Innenwandung (2.6) der Muffe (2.2) und die Außenwandung (3.4) des Rohrstücks (3.2) koaxial zur Achse (ax) verlaufende zylindermantelförmige Flächen darstellen.

4. Durchflussvorrichtung (1) nach einem der Ansprüche 1, 2 oder 3, **dadurch gekennzeichnet, dass** die Innenwandung (2.6) der Muffe (2.2) drei in axialer Richtung (ax) verlaufende Nuten (4.2, 5.2, 6.2) aufweist.

5. Durchflussvorrichtung (1) nach einem der Ansprüche 1 bis 4, **dadurch gekennzeichnet, dass** die Außenwandung (3.4) des Rohrstücks (3.2) drei in radialer Richtung verlaufende Nuten (4.1, 6.1) aufweist.

6. Durchflussvorrichtung (1) nach einem der Ansprüche 1 bis 5, **dadurch gekennzeichnet, dass** die Stirnseite des Rohrstücks (3.2) der Nabe (3) die Stirnseite der Muffe (2.2) bei aneinander angrenzenden Anlageflächen (2.6, 3.4; 2.7, 3.5) um eine Länge (d) überragt, dass die Muffe (2.2) eine im wesentlichen zylindermantelförmige Außenwandung (2.5) mit einer in Umfangsrichtung umlaufenden Nut (2.4) aufweist, dass koaxial zur Achse (ax) an der Stirnseite des Rohrstücks (3.2) ein Fixierring (7) mit einer zylindermantelförmigen Außenwandung (7.2) und in dieser in Umfangsrichtung umlaufender Nut (7.1) angeordnet ist.

## Claims

1. Through-flow device (1) for deflecting the flow (8) of a liquid or for transferring a pressure of a liquid by means of mechanical components (2, 3, 7) out of a direction of afflux (8.1) and into a direction of efflux (8.2) extending at an angle (α) thereto, said device comprising two mutually adjoining mechanical components (2, 3), wherein said two mutually adjoining mechanical components (2, 3) at least partially border on one another in a substantially form-locking manner at, in each case, two contact surfaces (2.6, 3.4; 2.7, 3.5) which extend at the angle (α) to one another in relation to one another, and wherein at least one, in each case, of the two mutually adjoining contact surfaces (3.4, 3.5) has a groove (4, 4.1,4.2; 5, 5.2; 6, 6.1, 6.2) which fixes the direction of afflux (8.1) and the direction of efflux (8.2),
**characterised in that**
one of the two mechanical components is a surrounding housing (2) - which is substantially radially symmetrical to an axis (ax) - of a gearbox arrangement and comprises a hollow-cylindrical central part (2.3) and a substantially circular-ring-shaped base part (2.1) closing off the said central part (2.3) at one end and having an inner wall (2.7), and that the other of the two mechanical components is a hub (3) and comprises a substantially circular-ring-shaped base piece (3.1) having an outer wall (3.5), and a tubular piece (3.2) adjoining the inner edge of said base piece (3.1) and having an outer wall (3.4), the surrounding housing (2) comprising a sleeve (2.2) adjoining the inner edge of the base part (2.1) and having an inner wall (2.6), and that the inner wall (2.7) of the base part (2.1) and the outer wall (3.5) of the base piece (3.1) and also the inner wall (2.6) of the sleeve (2.2) and the outer wall (3.4) of the tubular piece (3.2) form the respective contact surfaces.

2. Through-flow device (1) according to claim 1,
**characterised in that**
the inner wall (2.7) of the base part (2.1) and the outer wall (3.5) of the base piece (3.1) represent planes which extend radially to the axis (ax).

3. Through-flow device (1) according to one of claims 1 or 2,
**characterised in that**
the inner wall (2.6) of the sleeve (2.2) and the outer wall (3.4) of the tubular piece (3.2) represent cylinder-jacket-shaped surfaces which extend coaxially to the axis (ax).

4. Through-flow device (1) according to one of claims 1, 2 or 3,
**characterised in that**
the inner wall (2.6) of the sleeve (2.2) has three grooves (4.2, 5.2, 6.2) which extend in the axial direction (ax).

5. Through-flow device (1) according to one of claims 1 to 4,
**characterised in that**
the outer wall (3.4) of the tubular piece (3.2) has three grooves (4.1, 6.1) which extend in the radial direction.

6. Through-flow device (1) according to one of claims 1 to 5,
**characterised in that**
the front end of the tubular piece (3.2) of the hub (3) protrudes above the front end of the sleeve (2.2) by a length (d) when the contact surfaces (2.6, 3.4; 2.7, 3.5) adjoin one another, that the sleeve (2.2) has a substantially cylinder-jacket-shaped outer wall (2.5) having a groove (2.4) which runs round in the peripheral direction, and that there is disposed on the front end of the tubular piece (3.2), coaxially to the axis (ax), a fixing ring (7) having a cylinder-jacket-shaped outer wall (7.2) and a groove (7.1) which runs round in said outer wall in the peripheral direction.

## Revendications

1. Dispositif de débit (1), pour dévier un écoulement de fluide (8) ou pour transmettre une pression d'un liquide à travers des composants (2, 3, 7) mécaniques, d'une direction d'arrivée d'écoulement (8.1) en une direction d'évacuation d'écoulement (8.2) s'étendant sous un angle (α) par rapport à celle-ci, comprenant deux composants (2, 3) mécaniques limitrophes l'un à l'autre, sachant que les deux composants (2, 3) mécaniques limitrophes l'un à l'autre se délimitent l'un l'autre au moins partiellement pratiquement avec une liaison à ajustement de forme, chaque fois sur deux faces d'appui (2.6, 3.4 ; 2.7, 3.5) s'étendant sous l'angle (α) l'une par rapport à l'autre, et où au moins chaque fois l'une des deux faces d'appui (3.4, 3.5) limitrophes l'une à l'autre présente une gorge (4, 4.1, 4.2 ; 5, 5.2 ; 6, 6.1, 6.2) fixant la direction d'arrivée d'écoulement (8.1) et la direction d'évacuation d'écoulement (8.2), **caractérisé en ce qu'**un premier des deux composants mécaniques est un carter d'enveloppement (2), répondant sensiblement à une symétrie axiale par rapport à un axe (ax) appartenant à un agencement de transmission, comprenant une partie médiane (2.3) en forme de cylindre creux' et une partie de fond (2.1) sensiblement en forme d'anneau de cercle, délimitant cette partie médiane (2.3) à une extrémité et ayant une paroi intérieure (2.7), et **en ce que** l'autre des deux composants mécaniques étant un moyeu (3), comprenant une partie de fond (3.1), sensiblement en forme d'anneau de cercle, avec une paroi extérieure (3.5) et une pièce tubulaire (3.2), se raccordant au bord intérieur de la partie de fond (3.1) et munie d'une paroi extérieure (3.4), **en ce que** le carter d'enveloppement (2) comprend un manchon (2.2), délimité au bord intérieur de la partie de fond (2.1) et muni d'une paroi intérieure (2.6), et **en ce que** la paroi intérieure (2.7) de la partie de fond (2.1) et la paroi extérieure (3.5) de la partie de fond (3.1), ainsi que la paroi intérieure (2.6) du manchon (2.2) et la paroi extérieure (3.4) de la pièce tubulaire (3.2), forment les faces d'appui respectives.

2. Dispositif de débit (1) selon la revendication 1, **caractérisé en ce que** la paroi intérieure (2.7) de la partie de fond (2.1) et la paroi extérieure (3.5) de la partie de fond (3.1) constituent des plans s'étendant radialement par rapport à l'axe (ax).

3. Dispositif de débit (1) selon l'une des revendications 1 ou 2, **caractérisé en ce que** la paroi intérieure (2.6) du manchon (2.2) et la paroi extérieure (3.4) de la pièce tubulaire (3.2) constituent des faces à forme d'enveloppe cylindrique, s'étendant coaxialement par rapport à l'axe (ax).

4. Dispositif de débit (1) selon l'une des revendications 1, 2 ou 3, **caractérisé en ce que** la paroi intérieure (2.6) du manchon (2.2) présente trois gorges (4.2, 5.2, 6.2) s'étendant en direction axiale (ax).

5. Dispositif de débit (1) selon l'une des revendications 1 à 4, **caractérisé en ce que** la paroi extérieure (3.4) de la pièce tubulaire (3.2) présente trois gorges (4.1, 6.1) s'étendant en direction radiale.

6. Dispositif de débit (1) selon l'une des revendications 1 à 5, **caractérisé en ce que** la face frontale de la pièce tubulaire (3.2) du moyeu (3) dépasse de la face frontale du manchon (2.2), lorsque l'on a deux faces d'appui (2.6, 3.4 ; 2.7, 3.5) limitrophes l'une à l'autre, le dépassement étant d'une valeur (d), de sorte que le manchon (2.2) présente une paroi extérieure (2.5) sensiblement en forme d'enveloppe cylindrique avec une gorge (2.4) de pourtour en direction périphérique, **en ce qu'**une bague de fixation (7), avec une paroi extérieure (7.2) en forme d'enveloppe cylindrique et une gorge (7.1) faisant le pourtour en direction périphérique, est disposée coaxialement par rapport à l'axe (ax), sur la face frontale de la pièce tubulaire (3.2).
